# EUROPEAN PATENT APPLICATION

(11) **EP 2 263 475 A1**
(43) Date of publication of application: **22.12.2010**
(21) Application number: 09713887.9
(22) Date of filing: 26.02.2009
(51) Int. Cl.: A23L 1/015, A23L 1/00, A23L 1/03, A21D 2/36, A21D 13/00, A23L 1/16

(54) **LOW-PROTEIN FOOD AND MANUFACTURING METHOD FOR SAME**

(30) Priority: 28.02.2008 JP 2008047722
(71) Applicant: Ajinomoto Co., Inc., Tokyo 104-8315 (JP)
(72) Inventor: NAKAYA, Kaori, Shimada-shi Shizuoka 427-0101 (JP); OHTARA, Keiko, Shimada-shi Shizuoka 427-0101 (JP); OKAMOTO, Takeshi, Kawasaki-shi Kanagawa 210-8681 (JP); YAMADA, Noriaki, Kawasaki-shi Kanagawa 210-8681 (JP); KAGA, Chifumi, Shimada-shi Shizuoka 427-0101 (JP)
(74) Representative: Strehl Schübel-Hopf & Partner
(86) International application number: PCT/JP2009/054120
(87) International publication number: WO 2009/107866

(57) **Abstract**

By using α-glucosidase in production of a low protein food, it is possible to produce a low protein food having a good flavor, texture and quality.

## Description

### Technical Field

The present invention relates to a low protein food having a good flavor and texture, which can be prepared by using α-glucosidase, and to its production method.

### Background Art

It is known that the therapeutic effects in patients suffering from kidney diseases are increased by restricting the ingestion of proteins. Therefore, there are many patients who receive diet therapy, but it is difficult to restrict the ingestion of proteins in regular foodstuffs. In this situation, low protein foods in which proteins have been reduced or removed have been developed and marketed as foods for medical use. In particular, a number of low protein foods have been developed regarding the staple foods such as rice, noodles, rice cake, bread, and the like.

Conventional low protein foods, however, were not satisfactory in their flavor or texture because they were dissolved and lost shape in a usual cooking way similarly performed for regular foodstuffs or they were too tough or dry. As for known processes for producing low protein bread, the followings are exemplified: a process for producing low protein bread which comprises using starch in place of a part of wheat flour for bread such as hard flour (JP 5-7448 A); a method for reducing the regular protein content to about a half by using soft flour at a rate of 55 to 80% by weight for wheat flour (JP 9-168362 A); a method comprising using low protein rice flour in place of a part (25%) of hard flour (JP 2005-46108 A); a method comprising using starch in place of 50 parts by weight or more of wheat flour with addition of a polysaccharide thickener and dietary fiber (JP 11-155467 A); and a method comprising blending 3 to 30 parts by weight of carbohydrates with 5 to 50 parts by weight of starch hydrolysates for 100 parts by weight of wheat flour composition (JP 11-289966 A). In the bread prepared according to those methods, however, because of a decrease of the gluten amount, in comparison with conventional bread, the dough is poor in extensibility, a sufficient volume cannot be obtained during fermentation, and the function of maintaining gas is decreased to yield an ill-shaped product. The bread thus baked using such dough is small in volume and lack in soft feeling, giving no satisfactory texture.

In addition, in order to solve the problem that it is hard to obtain a good flavor of bread due to the difficulty of forming the network structure with gluten in low protein bread, a method of making bread in a conventional way using dough in which at least 1.5% by weight or more of a polysaccharide thickener as a film-forming material for the powder dough and a proper amount of pregelatinized starch and β-amylase as hardening inhibitors are added to powder dough containing starch as a main component, has been disclosed (JP 2007-215464 A). The bread made in this method, however, leaves much to be improved in quality in comparison with usual bread.

As for low protein noodles, rice noodles made with rice only as an ingredient (JP 2-234647 A), noodles using as ingredients wheat flour and partially pregelatinized starch (JP 7-194324 A), and noodles using as ingredients wheat flour and partially crosslinked pregelatinized starch (JP 9-275919 A)are exemplified. The rice noodles, however, are not acceptable since they are essentially different in texture and taste from that of wheat noodles. On the other hand, in the method using starch in place of wheat flour, the elasticity of noodles is reduced to make shape retention of noodle pastry worse because the amount of gluten working as a binder is reduced. The use of partially pregelatinized or crosslinked -pregelatinized starch is effective in improving to some degree, but noodle strings break during drying in the course of the production, resulting in unfavorable and unsatisfactory yield ratio.

WO 2005/096839 describes the use of transglucosidase being α-glucosidase in suppressing quality deterioration (retrogradation of starch) and in improving quality of bread, udon noodles, etc., but there is no description on using it in low protein foods.

### Disclosure of the Invention

The purpose of the invention is to provide a low protein food having a good flavor, texture and quality, and a method for producing the same.

The present inventors worked assiduously and found that the use of α-glucosidase improved the taste, texture and quality of low protein foods. Thus, the invention was completed. Namely, the invention comprises the followings.
(1) A method for producing a low protein food in which the protein content is 0.7 to 6.5%, characterized by using α-glucosidase.
(2) A method according to (1), wherein the low protein food is a processed wheat food.
(3) A method according to (2), wherein wheat flour and a substitute ingredient for wheat flour are used as ingredients for the processed wheat food, and the total weight of the substitute ingredient for wheat flour is 33 to 300% of the total weight of wheat flour.
(4) A method according to (2) or (3), wherein the processed wheat food is bread or a noodle.
(5) A low protein food which is produced by the method according to (3).
(6) Bread or a noodle which is produced by the method according to (3).

According to the invention, the low protein food having a good flavor, texture and quality, and the method for producing the same are characterized by a treatment with α-glucosidase. α-Glucosidase is an enzyme hydrolyzing a non-reducing terminal α-1,4-glucoside bond to produce α-glucose. Transglucosidase is an α-glucosidase having a saccharide transfer ability. The α-glucosidase used in the invention is preferably transglucosidase which is an enzyme having not only a hydrolyzing activity but also a saccharide transfer activity of converting an α-1,4-bond in glucose to an α-1,6-bond to produce a branched sugar, in the presence of a proper receptor having a hydroxyl group. In this connection, an enzyme commercialized in the trade name of Transglucosidase L "Amanao" from Amano Enzyme Co., Ltd. is one example of α-glucosidase.

A very little starch in wheat flour is decomposed by the action of transglucosidase; thus, a starch hydrolysate is not generated in such an amount corresponding to "a method of blending 5 to 50 parts by weight of starch hydrolysate for 100 parts by weight of wheat flour composition" as described in JP 11-289966 A; the present invention accordingly apparently differs from that as described in JP 11-289966 A. In this connection, glucoamylase causes the reaction similar to α-glucosidase ,but the resulting glucose is not α-glucose but β-glucose. Further, the enzyme used in this invention is quite different from β-amylase used in the invention as described in JP 2007-215464 A.

The low protein food of the invention means a food whose protein content is 0.7 to 6.5%, preferably 0.7 to 5.1%, produced by substituting a part of protein ingredients, preferably 25 to 70% of protein ingredients, with a low protein ingredient. Specifically it includes noodles such as udon noodles, Chinese noodles, buckwheat noodles, pasta, etc.; noodle pastry such as *gyoza* dumpling pastry, *shumai* pastry, dim sum, etc.; bread such as white table bread, French bread, sweetened buns, prepared bread, etc.; a processed wheat flour product using wheat flour as a main ingredient, such as doughnuts, cakes, hot cakes, lasagna pasta, macaroni, *manju, okonomiyaki* pancakes, and the like; and also includes their frozen products.

The protein ingredient used in the invention includes grain (e.g., rice, wheat, buckwheat, barley, corn, soybean, etc.), vegetables (potato, pumpkin, etc.), fruits, animal meat, fish meat, and the like. Their form includes powder, paste, and the like; and a representative protein ingredient is wheat flour.

The substitute ingredients for wheat flour used in the invention include polysaccharide thickeners such as starch, dextrin, dietary fiber, konjac powder, alga powder, carrageenan, alginate, gellan gum, etc. Other seasonings, emulsifiers, food preservatives, inorganic salts, organic salts, and the like are not included in the substitute ingredients for wheat flour in the invention. A variety of starches are considered to be included, including processed starch in addition to starches derived from all sorts of raw materials and their mixtures.

The low protein processed wheat food of the invention can be produced by substituting a substitute ingredient for wheat flour for 25 to 75% by weight of wheat flour ingredient, preferably 25 to 70% by weight, and more preferably 25 to 55% by weight. That is, the total weight of the substitute ingredient(s) for wheat flour (the total amount when used plural substitute ingredients) corresponds to 25 to 75% of the sum of the total weight of wheat flour and the total weight of the substitute ingredient (s), preferably to 25 to 70%, more preferably to 25 to 55%; in other words, the total weight of the substitute ingredient (s) to be substituted for wheat flour (the total amount when used plural substitute ingredients) corresponds to 33 to 300% of the total weight of wheat flour, preferably to 33 to 230%, more preferably to 33 to 122%.

In producing the low protein foods, when used α-glucosidase, it may be allowed to act on the ingredient(s) at any step in the production process. For example, in case of bread or noodles, the enzyme may be added during mixing or may be sprinkled over the ingredient (s) after mixing. Further, the enzyme may be used in combination with other enzymes or materials. Alternatively, a part or all of the ingredients may previously be treated with the enzyme to be used in the production. The enzyme to be added may be used in an amount of 1.5U or more per one gram of protein ingredient (s) such as wheat flour, preferably of 1.5 to 150,000U, more preferably 10U to 150,000U, further more preferably 100 to 10,000U, particularly in the range of 120 to 1,200U. As for the enzymatic activity, the amount of enzyme which produces 1 µg of glucose in 2.5 ml of the reaction mixture was defined as 1U when 1 ml of 0.02M acetate buffer (pH 5.0) was added to 1 ml of 1mM α-methyl-D-glucoside, followed by an addition of 0.5 ml of an enzyme solution, and kept at 40°C for 60 minutes. As for the reaction time of the enzyme, there is no particular limitation as far as the enzyme can act on the substrate; it may be allowed to act for a very short period of time or contrarily for a long period of time; in practice, preferably, it may be allowed to act for a period of 5 minutes to 24 hours. As for the reaction temperature, there is no limitation as far as the enzymatic activity is maintained, and in practice, preferably the enzyme may be allowed to act at a temperature of 0 to 100°C. In this range, enough reaction times can be secured in the course of the production of usual foodstuffs. For example, in the fermenting step for bread or in the aging step for noodles, enough times may be secured.

### Brief Description of the Drawings

Fig. 1 shows the result of the sensory evaluation for croissants (Example 1).
Fig. 2 shows the result of the appearance evaluation (height, relative volume) for croissants (Example 1).
Fig. 3 shows the result of the sensory evaluation for croissants (Example 2).
Fig. 4 shows the result of measurement of physical properties for low protein udon noodles (Example 3).
Fig. 5 shows the state of noodle pastry when 40% wheat starch was used in place of medium wheat flour (Example 3).

### Best Mode for Carrying Out the Invention

The invention will be explained in more detail by way of the following examples, which are not intended to limit the invention in any way.

### Example 1

"Transglucosidase L" (Amano Enzyme Co., Ltd.) (hereinafter sometimes referred to as TGL) was added to the charging water used in sponge dough, which was used in production of croissant shaped bread. The blending ratio of wheat flour for common croissants is 40 to 30 parts by weight of soft flour and 60 to 70 parts by weight of hard flour (100 parts by weight as wheat flour), but in this example, 30 parts by weight of hard flour, 25 parts by weight of soft flour (total amount of 55 parts by weight as wheat flour), 30 parts by weight of dietary fiber, and 15 parts by weight of wheat starch (45 parts by weight as the total amount of the substitute ingredients for wheat flour) were used. Namely, 45 parts by weight of wheat flour were substituted with dietary fiber and wheat starch, though 100 parts by weight of wheat flour were used generally. In this case, the total amount of the substitute ingredients for wheat flour corresponds to 82% of the total amount of wheat flour. The test samples for the substitute ingredients for wheat flour consisted of three samples, the control in which no enzyme was added, and the samples in which TGL was added at the concentrations of A and B.

The ingredients for the sponge dough as shown in Table 1 was placed in a mixer (Aicohsha Manufacturing Co., Ltd.; vertical mixer) and kneaded at a low speed rotation for 2 minutes and then at a moderate speed for 3 minutes (kneading temperature: 20°C), and fermented at 5°C for 24 hours to prepare sponge dough. This sponge dough was kneaded with main ingredients for kneading as shown in Table 2 at a low speed for 3 minutes and then at a moderate speed for 2 minutes (kneading temperature: 15°C), then cooled in a freezer for about
30 minutes, and fats were inserted therein by folding in an amount of 30% of the dough. The folding in four was made 3 times, where the dough was cooled in a freezer for 30 minutes after the folding in four at the 2nd time and at the 3rd time for resting the dough. The dough was formed into croissants of 55 ± 5 g, which were frozen at -30°C for 35 minutes. Thereafter, the sample kept under freezing at -20°C was thawed (22°C, 75% humidity) up to the core temperature of 20°C, and after the final fermentation (35°C, 40%),it was baked in an oven (upper side 190°C, lower side 210°C) for 15 minutes. The enzyme TGL was used in an amount of 120U for the test sample A and 1,200U for the sample B per 1 g of wheat flour. The baked bread was allowed to cool at a room temperature for about 60 minutes, wrapped one by one, stocked at -20°C for one day or for one week, then thawed at a room temperature for 2 hours, and the sensory evaluation and appearance evaluation were performed. The protein content in the resulting bread was 3.1%.

The sensory evaluation was done for the products of one day or one week storage under freezing, where the control sample in which no enzyme was added was regarded as 0 point, and the sample in which the enzyme was scored in the range of ±5 points.

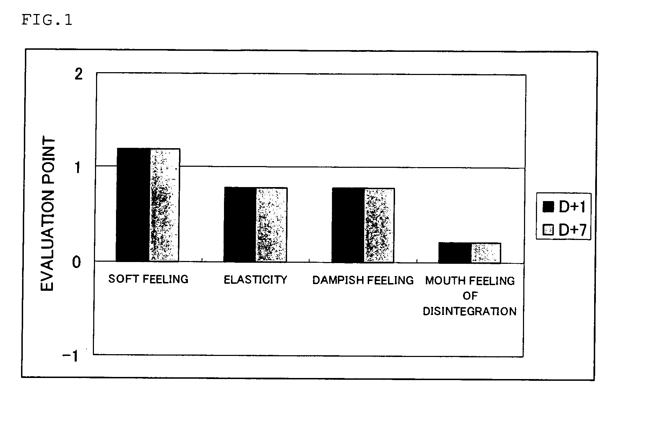

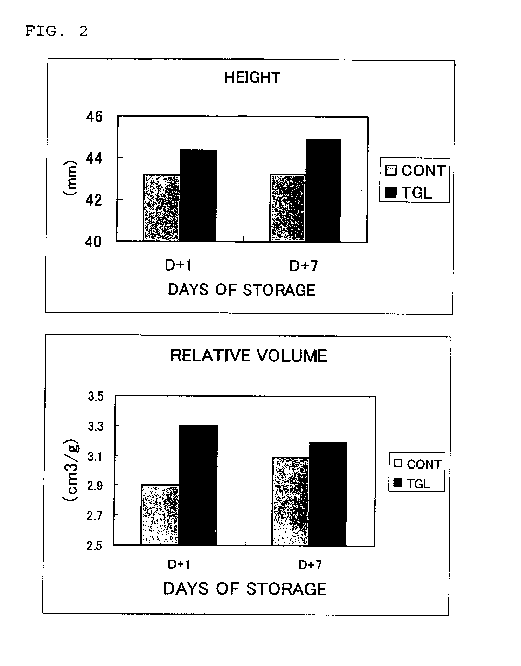

Fig. 1 shows the result of the sensory evaluation in the test sample A, and Fig. 2 shows the result of appearance evaluation (height and relative volume). From Fig. 1, it was recognized that a soft feeling, elasticity, dampish feeling, and mouth feeling of disintegration were improved by the addition of TGL in both cases of one day (D+1 in the figure) and 7 day (D+7 in the figure) storage after baking in comparison to the control. From Fig. 2, an effect of increasing the volume by the addition of TGL was observed.

**Table 1: Formulation of Sponge Dough for low protein bread**

| (Unit: part by weight) | | | |
|---|---|---|---|
| Ingredient | Control Sample | Test Sample A | Test Sample B |
| Hard flour | 30 | 30 | 30 |
| Wheat starch | 15 | 15 | 15 |
| TGL | 0 | 0.014 | 0.14 |
| Yeast | 1 | 1 | 1 |
| Glucose | 2 | 2 | 2 |
| Water | 28 | 28 | 28 |

**Table 2: Formulation of Main Kneaded Dough for low protein bread**

| (Unit: part by weight) | | | |
|---|---|---|---|
| Ingredient | Control Sample | Test Sample A | Test Sample B |
| Weak flour | 25 | 25 | 25 |
| Dietary fiber | 30 | 30 | 30 |
| Processed starch | 3 ' | 3 | 3 |
| Granulated sugar | 10 | 10 | 10 |
| Trehalose | 10 | 10 | 10 |
| Glucose | 3 | 3 | 3 |
| Improver | 0.5 | 0.5 | 0.5 |
| Table salt | 0.87 | 0.87 | 0.87 |
| Margarine | 10 | 10 | 10 |
| Yeast | 2.5 | 2.5 | 2.5 |
| Water | 24 | 24 | 24 |

From these results, it was elucidated that the addition of TGL was effective in increasing the volume and improving the texture of the low protein bread in which the protein content was 3.1%. In this situation, it was appropriate to add the enzyme in the range of 100 to 10,000U, preferably 120 to 1,200U per 1 g of wheat flour.

### Example 2

Subsequently, the sponge dough as shown in Table 3 and the main kneaded dough as shown in Table 4 were used, wherein 30 parts by weight of hard flour (total amount of wheat flour: 30 parts by weight), 40 parts by weight of wheat starch, and 30 parts by weight of dietary fiber (total amount of the substitute ingredients for wheat flour: 70 parts by weight) were used. That is, the parts corresponding to 70 parts of wheat flour were substituted with wheat starch and dietary fiber. Using the ingredients, bread samples were prepared according to the same method as in Example 1. Thus, the productionability of bread was evaluated. In this case, the total weight of the substitute ingredients for wheat flour corresponds to 233% of the total weight of wheat flour, and the protein content in the resulting bread becomes 2.2%. The experimental samples consisted of the control sample in which no enzyme was added and the test sample (Test Sample C) in which 120U of TGL was added per 1 g of wheat flour.

**Table 3:Formulation of Sponge Dough for low protein bread**

| (Unit: part by weight) | | |
|---|---|---|
| Ingredient | Control Sample | Test Sample C |
| Hard flour | 30 | 30 |
| Wheat starch | 15 | 15 |
| TGL | 0 | 0.014 |
| Yeast | 1 | 1 |
| Glucose | 2 | 2 |
| Water | 28 | 28 |

**Table 4: Formulation of Main Kneaded Dough for low protein bread**

| (Unit: part by weight) | | |
|---|---|---|
| Ingredient | Control Sample | Test Sample C |
| Wheat starch | 25 | 25 |
| Dietary fiber | 30 | 30 |
| Processed starch | 3 | 3 |
| Granulated sugar | 10 | 10 |
| Trehalose | 10 | 10 |
| Glucose | 3 | 3 |
| Improver | 0.5 | 0.5 |
| Table salt | 0.87 | 0.87 |
| Margarine | 10 | 10 |
| Yeast | 2.5 | 2.5 |
| Water | 24 | 24 |

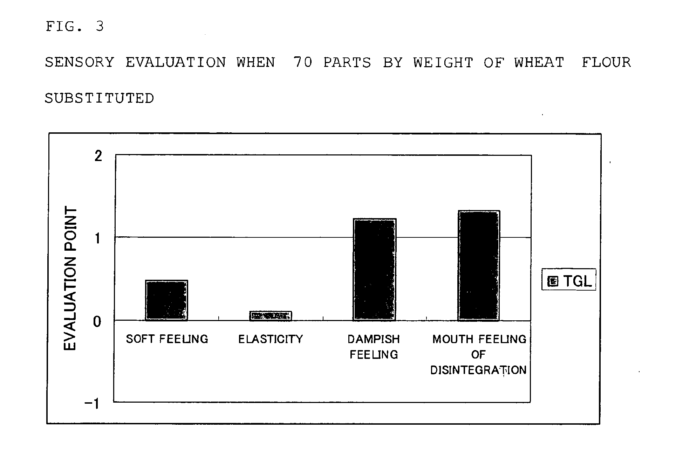

As a result, it was confirmed that it was possible to produce bread of the same shape as in the case in which the total weight of the substitute ingredients for wheat flour corresponded to 82% of the total weight of wheat flour, and that there was no problem in the productionability of bread. In addition, the sensory evaluation was done for each sample, where the control sample in which no enzyme was added was regarded as 0 point; the results indicated that a soft feeling, dampish feeling, and mouth feeling of disintegration was improved by the addition of TGL in the test sample C. Fig. 3 shows the results.

From these results, it was confirmed that the use of TGL made it possible to produce bread of good quality, in which the protein content was 2.2%, even though parts corresponding to 70 parts by weight of wheat flour were substituted with the substitute ingredients for wheat flour.

### Example 3

TGL was added and dissolved in a salt solution at 20°C prepared from 3 g of table salt and 37 g of tap water. As for ingredients, 30% of medium flour "wheat flour for hand-made udon noodles" (Nisshin Foods) was substituted with wheat starch "Jell Call" (J-Oil Mills). In this case, the total weight of the substitute ingredient for wheat flour corresponds to 43% of the total weight of wheat flour, and thus the protein content in the resulting udon noodles becomes 6.3%. Two samples were tested of the control sample in which no enzyme was added and the test sample in which TGL was added. During mixing the ingredients (100 g) by a kneader (HORBAT Co.), the above-mentioned enzyme solution was added thereto, and the mixture was kneaded at the speed 1 for 3 minutes and then at the speed 2 for 7 minutes. Then, the mixture was allowed to stand at 15°C for 1 hour in a thermohygrostat "LH21-12P" (Nagano Science Co., Ltd.), and then subjected to roughly mixing, compounding, compressing, and cutting, by using a pasta machine "R.M." (IMPERIA CO.). The compressing was achieved at a thickness of 6 established in the pasta machine and the cutting was performed to a cutting width of 4 mm by a cutter "R.220" (IMPERIA CO.) attached to the pasta machine. The enzyme TGL was used in an amount of 500U per 1 g of the raw material wheat flour.

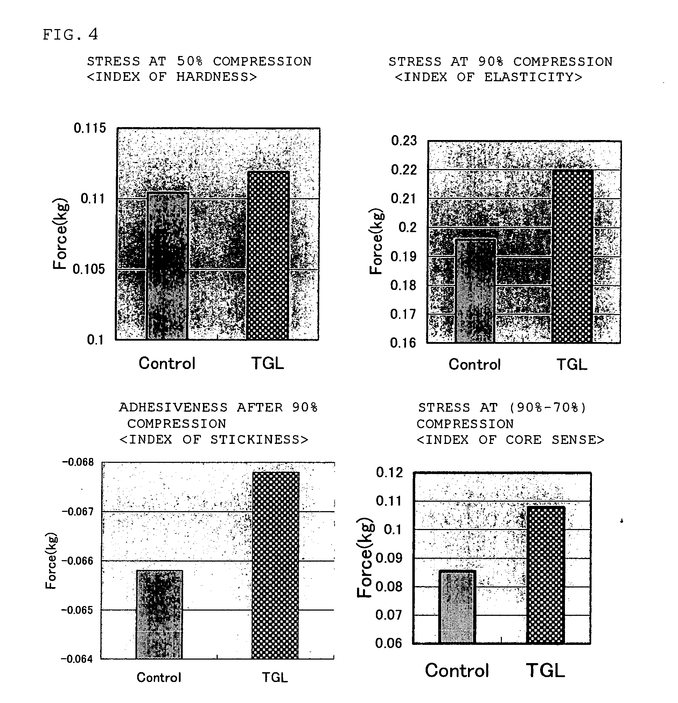

The uncooked noodles thus prepared were boiled in boiling water for 8 minutes, and then the sensory evaluation was performed. Part of the noodles was put into a zippered vinyl bag, and kept in a refrigerator for 1 day, and the sensory evaluation was performed. The results indicated that the texture of the sample in which no enzyme was added was unacceptable because it was unfavorably soft and spongy. On the other hand, by the addition of TGL, it was confirmed that hardness, elasticity, stickiness, and core sense were improved. These effects were also confirmed by a texture- analyzer "TA-XT plus" (Stable Micro Systems Co., Ltd.) (Fig. 4). Similarly, an effect of suppressing retrogradation after one day storage in a refrigerator was confirmed.

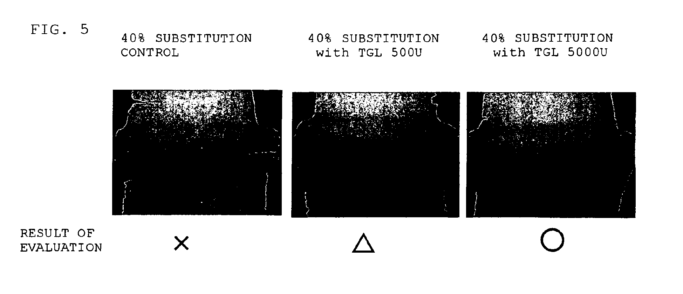

Subsequently, using ingredients obtained by substituting 40% of medium flour with wheat starch, udon noodles were prepared in the same manner to evaluate productionability of noodles. In this case, the total weight of the substitute ingredient for wheat flour corresponds to 67% of the total weight of wheat flour, and the protein content in the resulting udon noodles is 5.4%. Three test samples were tested of the control sample in which no enzyme was added, the sample in which 500U of TGL was added per 1 g of the raw material powder, and the sample in which 5000U of TGL was added per 1 g of the raw material powder. The results indicated that, in no addition of the enzyme, the production of noodles was possible up to the substitution of 30%, but in the case of 40%, the production was impossible because the dough was fragile and cracks were caused. On the other hand, in the TGL-added samples, cracks on the dough decreased with increase of the amount of TGL added, and the treatment with 5000U allowed the production of noodles (Fig. 5).

From these results, it was elucidated that the addition of TGL improved the texture of the low protein udon noodles in which the protein content was 5.4% and further improved the productionability.

### Industrial Applicability

Although low protein foods are essential to diet therapy for patients suffering from kidney diseases, the current situation is that their texture and quality are extremely unfavorable in comparison with conventional foods. According to the invention, it is possible to improve the flavor, the texture and the quality of low protein foods. Thus, the invention is very useful in the field of therapeutic foods.

## Claims

1. A method for producing a low protein food in which the protein content is 0.7 to 6.5%, **characterized by** using α-glucosidase.

2. A method according to Claim 1, wherein the low protein food is a processed wheat food.

3. A method according to Claim 2, wherein wheat flour and a substitute ingredient for wheat flour are used as ingredients for the processed wheat food, and the total weight of the substitute ingredient for wheat flour is 33 to 300% of the total weight of wheat flour.

4. A method according to Claim 2 or 3, wherein the processed wheat food is bread or a noodle.

5. A low protein food which is produced by the method according to Claim 3.

6. Bread or a noodle which is produced by the method according to Claim 3.
